**Europäisches Patentamt**

**European Patent Office**

**Office européen des brevets**

(11) Veröffentlichungsnummer: **0 046 225**
**B1**

(12) # EUROPÄISCHE PATENTSCHRIFT

(45) Veröffentlichungstag der Patentschrift:
**13.02.85**

(51) Int. Cl.⁴: **H 05 K 7/18, G 12 B 5/00**

(21) Anmeldenummer: **81105978.1**

(22) Anmeldetag: **29.07.81**

(54) Vorrichtung zum Aufstellen eines Datensichtgerätes auf einer Arbeitsfläche.

(30) Priorität: **20.08.80 DE 3031463**

(43) Veröffentlichungstag der Anmeldung:
**24.02.82 Patentblatt 82/8**

(45) Bekanntmachung des Hinweises auf die Patenterteilung:
**13.02.85 Patentblatt 85/7**

(84) Benannte Vertragsstaaten:
**AT BE CH FR GB IT LI LU NL SE**

(56) Entgegenhaltungen:
**EP - A - 0 031 595**
**DE - A - 2 723 146**
**FR - A - 2 338 453**

(73) Patentinhaber: **Siemens Aktiengesellschaft, Berlin und München Wittelsbacherplatz 2, D-8000 München 2 (DE)**

(72) Erfinder: **Lemche, Josef, Koboldstrasse 36, D-8000 München 83 (DE)**
Erfinder: **Edel, Bernhard, Ing.grad., Silberblattstrasse 29, D-8000 München 70 (DE)**

## Beschreibung

Die Erfindung betrifft eine Vorrichtung zum Aufstellen eines Datensichtgerätes auf einer Arbeitsfläche mit einer Bodenplatte, mit einer Höheneinstellvorrichtung, bestehend aus mindestens einem ein Parallelogrammgestänge aufweisenden und an der Bodenplatte befestigten Hebelarm und mindestens einem am Parallelogrammgestänge befestigten und parallel zur Bodenplatte geführten Stützarm, mit einer Schwenkvorrichtung zum Schwenken um eine horizontale Achse, mit einer Gewichtsausgleichseinrichtung, welche zumindest einen Teil des Gewichts des Datensichtgerätes kompensiert, und mit einer Haltevorrichtung zum Halten des Hebelarmes in der gewünschten Höhe.

Bei der Arbeit an einem Datensichtgerät ist man bestrebt, das Datensichtgerät in einer Lage aufzustellen, in welcher in bezug auf Blickrichtung, Entfernung, Blendfreiheit vor Fremdlicht möglichst wenige störende Einflüsse auf die Bedienungsperson ausgeübt werden.

Aus der DE-OS 2 847 135 ist bekannt, ein Datensichtgerät auf einer Tragevorrichtung aufzustellen. Diese besteht aus einem Basisteil und einem darauf um eine im wesentlichen horizontale erste Achse schwenkbar angeordneten Stützarm. An seinem freien Ende ist über eine zweite, zur ersten parallele Achse ein Tragarm schwenkbar angeordnet. Es sind Vorrichtungen vorgesehen, welche bei der Schwenkbewegung des Stützarms eine Parallelführung des Datensichtgerätes parallel zu sich selber gewährleisten, und Arretierungsmittel zum Festhalten des Stützarmes in einer gewünschten Schwenkstellung. Außerdem weist die Tragevorrichtung eine Ausgleichseinrichtung auf, welche das von dem Gewicht des Datensichtgerätes und des Stützarmes selbst auf diesen bezüglich seiner ersten Achse ausgeübte Drehmoment in jeder Stellung des Stützarmes mindestens annähernd kompensiert. Das Arretierungsmittel besteht aus einer mit einem Handgriff versehenen Klemmschraube, die an mindestens einer Seite der zweiten Welle axial in diese einschraubbar ist und einen Flansch aufweist, mit welchem der Stützarm gegen den starr mit der oberen Welle verbundenen Tragarm spannbar ist. Die Gewichtsausgleichseinrichtung ist von einer Torsionsfeder gebildet, die in der Gelenkverbindung zwischen dem Stützarm und dem Basisteil angeordnet ist und die erste Achse koaxial umgibt.

Die Ausbildung der Gewichtsausgleichseinrichtung als Torsionsfeder, welche in der Gelenkverbindung angeordnet ist, hat jedoch den Nachteil, daß der mit einem Vorspannen der Torsionsfeder verbundene Einbau mit wachsender Federkraft der Torsionsfeder schwierig zu handhaben ist. Torsionsfedern mit kleinerer Federkraft schließen jedoch den Einsatz der Tragevorrichtung für größere Datensichtgeräte aus. Die Verwendung von Stahlbändern in der Vorrichtung zur Parallelführung des Datensichtgerätes setzt voraus, daß die Stahlbänder stark gespannt sind, um ein Spiel zu vermeiden. Die dazu erforderlichen Vorkehrungen können jedoch eingespart werden. Die als Klemmvorrichtung dienende Klemmschraube eignet sich wegen der geringen damit auszuübenden Hebelkraft nur zum Erzeugen kleinerer Spannkräfte zwischen den zu arretierenden Teilen, so daß sie ebenfalls zum Arretieren der Tragevorrichtung bei großen Datensichtgeräten nicht geeignet ist.

Es war daher Aufgabe der Erfindung, eine Vorrichtung zum Aufstellen eines Datensichtgerätes auf einer Arbeitsfläche anzugeben, mit welcher bei einem Datensichtgerät unabhängig von dessen Gewicht eine Höhenverstellung und eine Schwenkbewegung um eine horizontale Achse ausgeführt werden kann, und bei der eine sichere Begrenzung dieser Schwenkbewegung sowie auch ein einfacher Einbau der Gewichtsausgleichsfeder gewährleistet sind.

Die Aufgabe wird dadurch gelöst, daß die Höheneinstellvorrichtung zwei Hebelarme und zwei Stützarme aufweist, daß die Gewichtsausgleichseinrichtung aus einer zwischen mindestens einem Hebelarm und dem dazugehörigen Parallelogrammgestänge angeordneten Druckfeder besteht und daß die Schwenkvorrichtung aus einer das Datensichtgerät tragenden Wiege und aus an dieser und den beiden Stützarmen angeordneten, ineinandergreifenden Führungsmitteln besteht, und daß die Druckfeder mit einer das Datensichtgerät nach oben bewegenden Kraft vorgespannt ist. Diese Höheneinstellvorrichtung hat den Vorteil, daß sich für die Ausgleichsvorrichtung eine oder mehrere Druckfedern einsetzen lassen, deren Einbau in den Hebelarm unproblematisch ist. Die Schwenkplatte hat den Vorteil, daß sie sich zum Tragen von verschiedenen Ausführungen eines Datensichtgerätes eignet. Der Anschlag verhindert eine Schwenkbewegung in eine Lage, in welcher der feste Halt des Datensichtgerätes auf der Schwenkplatte nicht mehr gewährleistet ist. Gemäß einem weiteren Ausführungsbeispiel ist die Schwenkplatte zwischen den Stützarmen angeordnet und bestehen die Führungsmittel aus jeweils einer kreissegmentförmig verlaufenden Nute in jedem Stützarm und aus zwei an der Schwenkplatte angeordneten Stegen zum Eingriff in die Nuten. Damit wird eine sichere Führung der Schwenkplatte bei einer Schwenkbewegung erreicht. Die Höheneinstellung des Datensichtgerätes erfolgt selbsttätig.

Gemäß einem weiteren Ausführungsbeispiel ist die Schwenkplatte auswechselbar angeordnet. Das hat den Vorteil, daß die Schwenkplatte bei Bedarf an verschiedene Ausführungsformen eines Datensichtgerätes angepaßt werden kann.

Gemäß einem weiteren Ausführungsbeispiel besteht die Haltevorrichtung aus einer in der Drehachse der Hebelarme liegende, in zwei Gegenlagern gelagerten Welle, aus an mindestens einem der Hebelarme befestigten und über die Welle geführten Lagern zum Andrücken an die Gekgenlager, aus einem über ein weitgängiges Gewinde auf der Welle angeordneten Spannhebel zum Erzeugen einer Bremskraft, aus Kraftübertragungsmitteln zwischen dem Spannhebel und den Lagern und aus Bremselementen zwischen den Gegenlagern und den Lagern.

Mit dem Spannhebel kann wegen seiner großen Hebelkraft eine genügend große Bremskraft erzeugt werden, die ein sicheres Halten der Höheneinstellvorrichtung in jeder Stellung gewährleistet. Aufgrund der Bremselemente kommt die Bremskraft voll zur Wirkung. Das weitgängige Gewinde hat den Vorteil, daß die Bremskraft mit einer geringen Bewegung des Spannhebels erzeugt wird. Dadurch kann der Spannhebel so angeordnet sein, daß er in keiner Stellung für die Bedienungsperson hinderlich ist, und die Vorrichtung freizügig auf der Arbeitsfläche aufstellbar ist. Gemäß einem weiteren Ausführungsbeispiel bestehen die Kraftübertragungsmittel aus rohrförmigen, über die Welle geführten Körpern mit an ihren Enden sich kegelförmig erweiternden Querschnittsflächen und aus zwischen den Körpern und den Lagern angeordneten Blattfedern. Derartige Kraftübertragungsmittel verteilen die Kraft gleichmäßig auf die Fläche, die von den Bremselementen eingenommen wird und steigern somit die Bremswirkung. Die Blattfedern erzeugen eine Vorspannung, so daß am Spannhebel kein Spiel auftritt.

Gemäß einem weiteren Ausführungsbeispiel ist die Druckfeder mit dem einen Ende am Hebelarm und mit dem anderen Ende an einer der Stangen des Parallelogrammgestänges befestigt.

Das hat den Vorteil, daß bei einer Bewegung des Hebelarmes ein kurzer Federweg und somit ein gleichmäßiger Kraftverlauf gewährleistet ist.

Gemäß einem weiteren Ausführungsbeispiel ist eine Vorspanneinrichtung zum Einstellen der Vorspannung der Druckfeder vorhanden. Es ist somit möglich, die Vorspannung dem Gewicht eines Datensichtgerätes anzupassen. Bei großen Gewichtsunterschieden ist die Druckfeder auszutauschen. Im folgenden wird die Vorrichtung anhand eines Ausführungsbeispiels weiter erläutert.

Fig. 1 zeigt eine Ansicht der Vorrichtung,

Fig. 2 zeigt eine Ansicht der Haltevorrichtung.

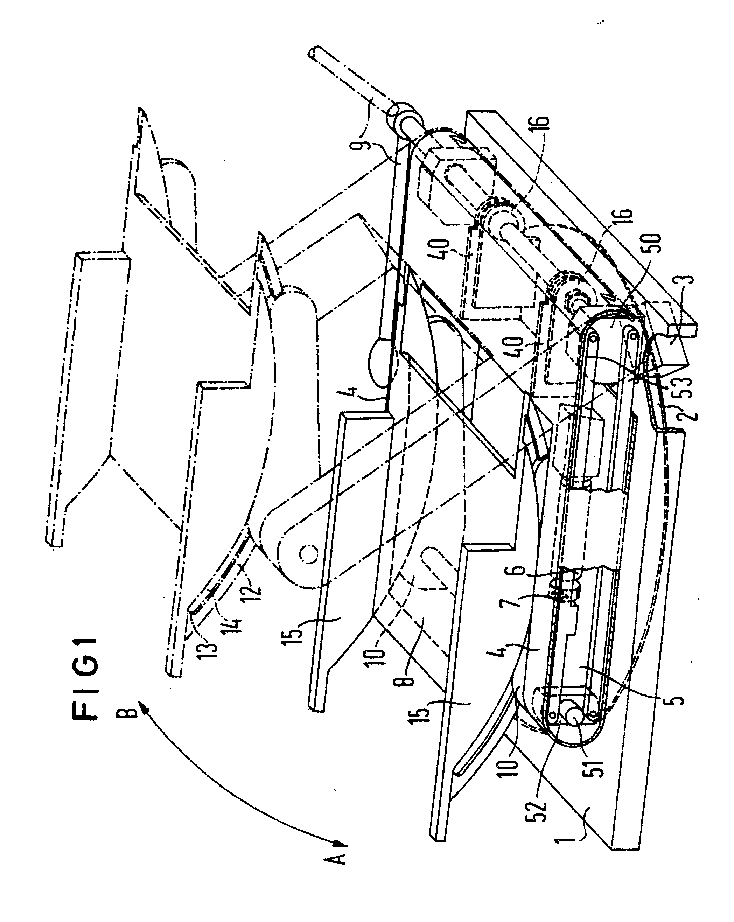

In Fig. 1 sind sämtliche Einzelteile der Vorrichtung dargestellt. Unter einer Bodenplatte 1 ist eine Drehscheibe 2 angeordnet, die in Lagern 3 geführt ist. Die Drehscheibe 2 weist einen nicht dargestellten Kunststoffwulst an ihren Rändern auf, mit welchem sie auf einer Arbeitsfläche aufliegen. Auf der Bodenplatte sind zwei Hebelarme 4 und daran jeweils ein Stützarm 10 angeordnet. Zwischen den Stützarmen 10 befindet sich eine Schwenkplatte 8. Die Hebelarme 4, die Stützarme 10 und die Schwenkplatte 8 sind in einer Stellung A und einer Stellung B, die punktgestrichelt dargestellt ist. In der Stellung A nehmen die Hebelarme ihre tiefste Stellung ein, während die Stellung B dem höchsten Stand der Höheneinstellvorrichtung entspricht. Der in der Stellung B von den Tragarmen 4 gegenüber der Bodenplatte 1 gebildete Winkel ist kleiner als 45°.

Die Hebelarme 4 weisen jeweils ein Lager 40 auf, welches in einer Welle 17 geführt ist. Die Welle 17 ist über auf der Bodenplatte 1 befestigten Gegenlager 16 parallel zu dieser geführt. Jeder Hebelarm 4 ist hohl ausgebildet. In seinem Inneren befindet sich ein Parallelogrammgestänge 5. Es besteht aus zwei Stangen 53, die mit ihrem einen Ende in einem auf der Bodenplatte 1 befestigten Lagerblock 50 drehbar gelagert sind, und mit ihrem anderen Ende in einer Halterung 52. In dieser liegt drehfest ein Achszapfen 51, welcher am Stützarm 10 befestigt ist. Die beiden Achszapfen 51 der beiden Stützarme 10 können auch mit einer Welle verbunden sein. An einer der Stangen 53 ist mit einem Ende eine Druckfeder 6 befestigt, welche mit ihrem anderen Ende am Tragarm 4 befestigt ist. Die Druckfeder 6 ist mit einer solchen Kraft vorgespannt, daß sie das Gewicht des Hebelarmes sowie der darauf angeordneten Einrichtungen, wie Wiege, Datensichtgerät usw. kompensiert. Das bedeutet, daß das Datensichtgerät selbsttätig aus der Stellung A in die Stellung B gehoben wird.

Es wäre auch möglich, die Druckfeder 6 mit einem Ende an der einen Stange 53 und mit dem anderen Ende an der anderen der beiden Stangen 53 anzuordnen. Diese Anordnung ergibt aber gegenüber der erstgenannten bei einer Bewegung des Hebelarmes 4 einen längeren Federweg, was einen nichtlinearen Kraftgang der Druckfeder 6 zur Folge haben kann. Da bei der Bewegung der Hebelarme 4 ein annähernd linearer Kraftgang erwünscht ist, ist die erstgenannte Anordnung der Druckfeder 6 vorzuziehen.

Die Druckfeder 6 ist zur Halterung an ihrem einen Ende über einen mit einem Gewinde versehenen Bolzen geführt (nicht dargestellt). Auf dem Bolzen ist außerdem eine Mutter 7 geführt. Durch Drehen wird damit die Vorspannung der Druckfeder 6 eingestellt. Die Mutter 7 kann mit nicht dargestellten Vorrichtungen versehen sein, die ein Drehen ohne Werkzeug zulassen.

An jedem der beiden Achszapfen 51 ist ein Stützarm 10 zum Tragen der Schwenkvorrichtung 8, 12, 13, 14 befestigt. Er hat die Aufgabe, die darauf angeordnete Schwenkvorrichtung 8, 10, 12, 13, 14 beim Anheben der Stützarme 4 ständig in einer unveränderten Winkellage zur Bodenplatte 1 zu halten.

Die Schwenkvorrichtung 8, 10, 12, 13, 14, 15 weist an ihren beiden Seitenteilen 15 jeweils eine kreissegmentförmig verlaufende Nute 14 und einen ebenso verlaufenden Steg 12 auf. Zum Eingriff in die Nuten 14 und zur Aufnahme der Stege 12 sind auf den Stützarmen 10 ebenfalls Stege und Nuten ausgebildet. Die Wiege 8 wird von den Nuten 14 und den Stegen 12 geführt und in einer Schwenkbewegung bewegt. Diese Schwenkbewegung ist nach einer Seite durch einen Anschlag 13 an einem Ende der Nuten 14 begrenzt. Das andere Ende der Nuten 14 weist keinen Anschlag auf, so daß die Wiege 8 mit einer Schwenkbewegung, welche die Nuten 14 und Stege 12 und der Wiege 8 und den Stützarmen 10 außer Eingriff bringt, von den Stützarmen getrennt wird. Somit kann eine Wiege 8 gegen eine andere ausgetauscht werden. Sobald sich ein Datensichtgerät auf der Wiege 8 befindet, dient dieses neben dem Anschlag 13 dazu, die Schwenkbewegung zu begrenzen. Die Radien der Nuten 14 sind so bemessen, daß sich bei einer Schwenkbewegung der Schwerpunkt des Datensichtgerätes immer oberhalb der Stützarme 10 befindet. Ein Spannhebel 9 dient zum Betätigen einer Haltevorrichtung zum Halten der Hebelarme 4 in einer gewünschten Höhe. Die strichpunktierte Darstellung gibt seine Stellung an, wenn die Haltevorrichtung gelöst ist, so daß die Hebelarme 4 beweglich sind.

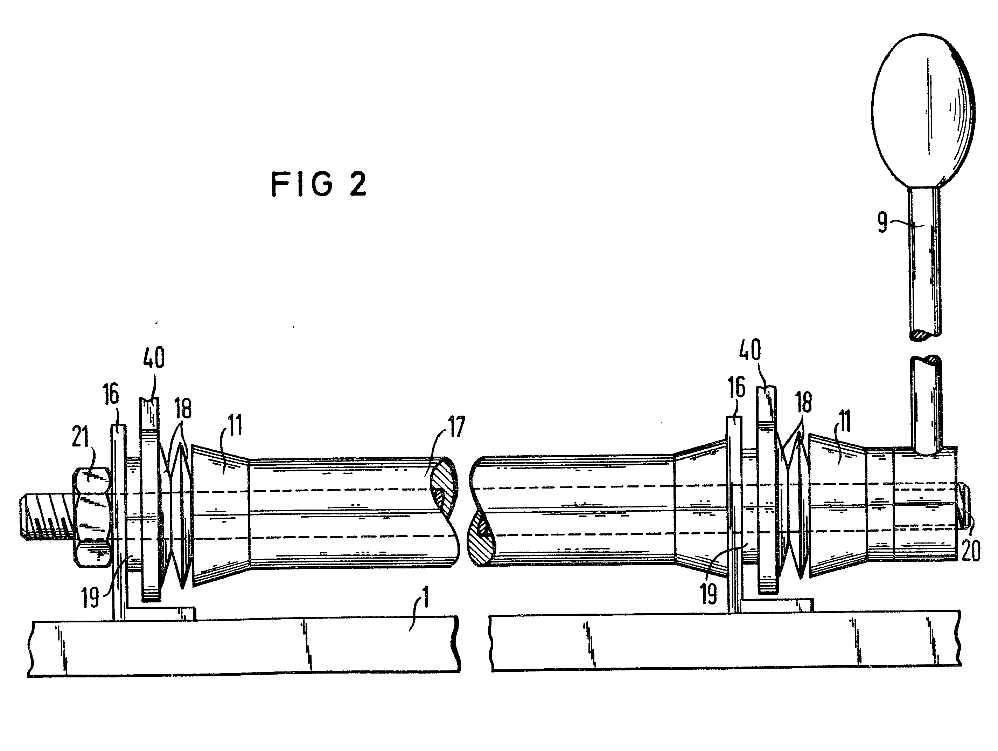

Fig. 2 zeigt Einzelheiten der Haltevorrichtung. Die Welle 17 ist in den auf der Bodenplatte 1 befestigten Gegenlagern 16 geführt. Mit 40 sind die Lager der Hebelarme 4 auf der Welle 17 bezeichnet. Jeweils eines der beiden Lager 40 ist einem der Gegenlager 16 zugeordnet. Dabei befindet sich eines der Lager 40 zwischen den beiden Gegenlagern 16. Die Welle wird an eine Bewegung in axialer Richtung auf der einen Seite durch ein Verbindungsmittel 21 und auf der anderen durch den Spannhebel 9 gehindert. Zwischen den Lagern 40 und den zugeordneten Gegenlagern 16 ist ein Bremselement 19 angebracht. Auf der dem Spannhebel 9 zugewandten Seite der Lager 40 sind Tellerfedern 18 auf der Welle 17 angeordnet. Zwischen den Tellerfedern 18 und einem der Gegenlager 16 bzw. dem Spannhebel 9 sind rohrförmige Körper 11 mit an ihren Enden sich erweiternden Querschnitten über die Welle 17 geführt. Diese weist auf der Seite, auf welcher der Spannhebel 9 angeordnet ist, ein weitgängiges Gewinde 20 auf, in welches der Spannhebel 9 eingreift.

Durch eine Drehung in eine Richtung wird der Spannhebel 9 auf die Lager 40 zu bewegt. Diese Bewegung und die dabei auftretende Kraft wird über die Kraftübertragungsglieder 11 und die Tellerfedern 18 auf die Lager 40 und die Bremselemente 19 übertragen. Dadurch wird die Reibung zwischen den Lagern 40 und den Gegenlagern 16 erhöht, und die Hebelarme 4 in ihrer Lage gegenüber der Bodenplatte 1 festgehalten.

## Patentansprüche

1. Vorrichtung zum Aufstellen eines Datensichtgerätes auf einer Arbeitsfläche, mit einer Bodenplatte (1), mit einer Höheneinstellvorrichtung (4, 5, 6, 7, 10), bestehend aus mindestens einem ein Parallelogrammgestänge (50 bis 53) aufweisenden Hebelarm (4), der in einer auf der Bodenplatte angeordneten Welle (17) gelagert ist, und aus mindestens einem, am Parallelogrammgestänge befestigten und parallel zur Bodenplatte geführten Stützarm (10), mit einer Schwenkvorrichtung (8, 12, 13, 14, 15) zum Schwenken um eine horizontale Achse, mit einer Gewichtsausgleichseinrichtung (6), welche zumindest einen Teil des Gewichts des Datensichtgerätes kompensiert, und mit einer Haltevorrichtung (9, 11, 18, 19) zum Halten des Hebelarms in einer gewünschten Höhe, dadurch gekennzeichnet, daß die Höheneinstellvorrichtung zwei Hebelarme (4, 5) und zwei Stützarme (10) aufweist, daß die Gewichtsausgleichseinrichtung aus einer zwischen mindestens einem der Hebelarme (4, 5) und dem dazugehörigen Parallelogrammgestänge (5) angeordneten Druckfeder (6) besteht, daß die Schwenkvorrichtung aus einer das Datensichtgerät tragenden Wiege (8), aus an dieser und den beiden Stützarmen (10) angeordneten, ineinandergreifenden Führungsmitteln, und aus mindestens einem Anschlag (13) zum Begrenzen der Schwenkbewegung besteht, und daß die Druckfeder (6) mit einer das Datensichtgerät nach oben bewegenden Kraft vorgespannt ist.

2. Anordnung nach Anspruch 1, dadurch gekennzeichnet, daß die Wiege (8) zwischen den Stützarmen (10) angeordnet ist, daß sie zwei Seitenteile (15) aufweist, und daß die Führungsmittel aus jeweils einer kreissegmentförmig verlaufenden Nute (14) in jedem Seitenteil (15) und jedem Stützarm (10) und aus jeweils einem Steg (12) auf jedem Seitenteil (15) und jedem Stützarm (10) zum Eingriff in die Nuten (14) bestehen.

3. Anordnung nach Anspruch 1, dadurch gekennzeichnet, daß die Wiege (8) auswechselbar angeordnet ist.

4. Vorrichtung nach einem der vorhergehenden Ansprüche, gekennzeichnet durch die Haltevorrichtung, bestehend aus einem über ein weitgängiges Gewinde (20) auf der Welle (17) angeordneten Spannhebel (9) zum Erzeugen einer Bremskraft und aus Kraftübertragungsmitteln (11) zwischen dem Spannhebel (9) und den Lagern (40) der Hebelarme (4), wobei die Kraftübertragungsmittel (11) aus über die Welle (17) geführten Körpern (11) mit an ihren Enden sich kegelförmig erweiternden Querschnittsflächen, aus zwischen den Körpern (11) und den Lagern (14) angeordneten Blattfedern (18) und aus Bremselementen (19) zwischen den Lagern (40) und den auf der Bodenplatte (1) angeordneten Gegenlagern (16) bestehen.

5. Vorrichtung nach einem der vorhergehenden Ansprüche, dadurch gekennzeichnet, daß die Druckfeder (6) mit dem einen Ende am Hebelarm (4) und mit dem anderen Ende an einer der Stangen (53) des Parallelogrammgestänges (5) befestigt ist.

6. Vorrichtung nach einem der vorhergehenden Ansprüche, gekennzeichnet durch eine Vorspanneinrichtung (7) zum Einstellen einer Vorspannung der Druckfeder (6).

## Claims

1. Apparatus for setting up a video display unit on a working surface, having a base plate (1); a height adjusting device (4, 5, 6, 7, 10) consisting of at least one lever arm (4) which has a parallelogram linkage system (50–53) and is mounted in a shaft (17) arranged on the base plate, and at least one support arm (10) which is attached to the parallelogram linkage system and is led parallel to the base plate; a pivotting device (8, 12, 13, 14, 15) for pivotting about a horizontal axis; a weight compensating device (6) which compensates for at least a part of the weight of the video display unit; and a holding device (9, 12, 18, 19) for holding the lever arm at a desired height, characterised in that the height adjusting device has two lever arms (4, 5) and two support arms (10); that the weight compensating device consists of a compression spring (6) which is arranged between at least one of the lever arms (4, 5) and the associated parallelogram linkage system (5); that the pivotting device consists of a cradle (8) which carries the video display unit, guide means which are arranged on said cradle and the two support arms (10), and which engage with one another, and at least one stop (13) which serves to limit the pivotting movement; and that the compression spring (6) is biassed by a force which moves the video display unit upwards.

2. Apparatus as claimed in Claim 1, characterised in that the cradle (8) is arranged between the support arms (10); that it has two side parts (15); and that the guide means each consists of a slot (14) in the form of a segment of a circle, in each side part (15) and each support arm (10), and of a peg (12) on each side part (15) and each support arm (10) which serves to engage in the slots (14).

3. Apparatus as claimed in Claim 1, characterised in that the cradle (8) is arranged so as to be interchangeable.

4. Apparatus as claimed in one of the preceding Claims, characterised by the holding device consisting of a clamping lever (9) which is aranged on the shaft (17) vie a wide-pitched screw thread (20) to produce a braking force, and further consisting of power transmission means (11) between the clamping lever (9) and the bearings (40) of the lever arms (4), the power transmission means (11) consisting of bodies (11) passed over the shaft (17) and which have crossectional surfaces which widen conically at their ends, of leaf springs (18) arranged between the bodies (11) and the bearings (14), and of braking elements (19) arranged between the bearings (40) and the counterbearings (16) which are arranged on the base plate (1).

5. Apparatus as claimed in one of the preceding Claims, characterised in that the compression spring (6) is attached at one end to the lever arm (4) and at the other end to one of the rods (53) of the parallelogram linkage system (5).

6. Apparatus as claimed in one of the preceding Claims, characterised by a biassing device (7) which serves to set a bias for the compression spring (6).

**Revendications**

1. Dispositif pour le montage d'un appareil de visualisation de données sur une surface de travail, comportant une plaque de base (1), un dispositif de réglage en hauteur (4, 5, 6, 7, 10), constitué par au moins un bras de levier (4) comportant une tringlerie en forme de parallélogramme (50, 53) et qui est monté tourillonné sur un arbre (17) disposé sur la plaque de base, et au moins un bras d'appui (10) fixé sur la tringlerie en forme de parallélogramme et guidé parallèlement à la plaque de base, un dispositif de basculement (8, 12, 13, 14, 15) pour réaliser un basculement autour d'un axe horizontal, un dispositif (6) d'équilibrage du poids, qui compense au moins une partie du poids de l'appareil de visualisation, et un dispositif de support (9, 11, 18, 19) servant à maintenir le bras de levier à une hauteur désirée, caractérisé par le fait que le dispositif de réglage en hauteur comporte deux bras de levier (4, 5) et deux bras d'appui (10), que le dispositif d'équilibrage de poids est constitué par un ressort de pression (6) disposé au moins entre l'un des bras de levier (4, 5) et la tringlerie associée en forme de parallélogramme (5), que le dispositif de basculement est constitué par un berceau (8) portant l'appareil de visualisation de données, par des moyens de guidage s'interpénétrant, qui sont disposés sur le berceau et sur les deux bras d'appui (10), et par une butée (13) servant à limiter le mouvement de basculement, et que le ressort de pression (6) est précontraint avec une force déplaçant l'appareil de visualisation des données vers le haut.

2. Dispositif suivant la revendicatiion 1, caractérisé par le fait que le berceau (8) est disposé entre les bras d'appui (10), qu'il comporte deux éléments latéraux (15), et que les moyens de guidage sont constitués respectivement par une gorge (14) en forme de segment de cercle située dans chaque partie latérale (15) et dans chaque bras d'appui (10), et par des barrettes (12) situées respectivement sur les parties latérales (15) et sur les bras d'appui (10) et destinées à s'engager dans la gorge (14).

3. Dispositif suivant la revendication 1, caractérisé par le fait que le berceau (8) est monté de façon à pouvoir être remplacé.

4. Dispositif suivant l'une des revendications précédentes, caractérisé par le fait que le dispositif de maintien est constitué par un levier de serrage (9) monté sur l'arbre (17) par l'intermédiaire d'un filetage (20) à grand pas, et servant à produire une force de freinage, et par des moyens (11) de transmission de force disposés entre le levier de serrage (9) et les paliers (40) des bras de levier (4), les moyens (11) de transmission de force étant constitués par des corps (11) guidés par l'intermédiaire de l'arbre (17) et doint les extrémités comportent des surfaces en coupe transversale qui s'élargissent avec une forme conique, par des ressorts à lames (18) disposés entre les corps (11) et les paliers (14), et par des organes de freinage (19) disposés entre les paliers (40) et les butées (16) disposées sur la plaque de base (1).

5. Dispositif suivant l'une des revendications précédentes, caractérisé par le fait que le ressort de pression (6) est fixé par une extrémité sur le bras de levier (4) et par l'autre extrémité sur l'une des barres (53) de la tringlerie en forme de parallélogramme (5).

6. Dispositif suivant l'une des revendications précédentes, caractérisé par un dispositif de précontrainte (7) servant à régler une précontrainte du ressort de pression (6).

FIG 1

# FIG 2

0 046 225